# EUROPEAN PATENT APPLICATION

(11) **EP 4 574 330 A1**
(43) Date of publication of application: **25.06.2025**
(21) Application number: 24218858.9
(22) Date of filing: 10.12.2024
(51) Int. Cl.: B23K 37/006

(54) **WELD MONITORING SYSTEMS WITH JOB AND PART POSITION TRACKING**

(30) Priority: 20.12.2023 US 202363612685 P; 25.11.2024 US 202418958095
(71) Applicant: Illinois Tool Works Inc., Glenview IL 60025 (US)
(72) Inventor: ROMANO, Vincent Nicholas, Glenview 60025 (US); MCELLIS, Todd Michael, Glenview 60025 (US); FALDE, Leland Daryl, Glenview 60025 (US); IVKOVICH, Stephen P., Glenview 60025 (US)
(74) Representative: HGF

(57) **Abstract**

In some examples, weld monitoring systems automatically identify a job and/or part on which an operator and/or tool is work based on a tracked position and/or orientation of an operator and/or tool. The weld monitoring systems may automatically provide appropriate welding instructions to the operator based on the identified job and/or part. The weld monitoring systems may also identify appropriate equipment and/or devices for the identified job and/or part, and/or configure the equipment and/or devices appropriately for the identified job and/or part.

## Description

### CROSS REFERENCE TO RELATED APPLICATIONS

This application claims priority to, and the benefit of, U.S. Provisional Patent Application No. 63/612,685, entitled "Weld Monitoring Systems with Job and Part Position Tracking," filed December 20, 2023, the entire contents of which being hereby incorporated by reference.

### TECHNICAL FIELD

The present disclosure generally relates to weld monitoring systems, and, more particularly, to weld monitoring systems with job and part position tracking.

### BACKGROUND

Weld monitoring systems monitor data pertaining to welding operations and related activities. In order to monitor the welding operations, some weld monitoring systems rely upon welding operators to provide input about the welding operations. Unfortunately, operators often become preoccupied or forgetful, and neglect to describe what is happening. Lack of operator input can result in ineffective monitoring.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to weld monitoring systems with job and part position tracking, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example of a weld monitoring system, in accordance with aspects of this disclosure.
FIG. 2a is a block diagram of the example weld monitoring system of FIG. 1, in accordance with aspects of this disclosure.
FIG. 2b is a diagram illustrating an example database that may be used in or with the weld monitoring system of FIG. 2a, in accordance with aspects of this disclosure.
FIG. 3 is a flow chart illustrating an example monitoring process of the weld monitoring system of FIG. 2a, in accordance with aspects of this disclosure.
FIG. 4 shows an example of a facility having several welding and non-welding areas, in and/or around which the weld monitoring system of FIGS. 1-2a may track a position and/or orientation of an operator and/or welding-type tool relative to one or more stored part/job locations, in accordance with aspects of this disclosure.

The figures are not necessarily to scale. Where appropriate, the same or similar reference numerals are used in the figures to refer to similar or identical elements.

### DETAILED DESCRIPTION

Some examples of the present disclosure relate to weld monitoring systems that automatically identify a job and/or part on which an operator and/or tool is working based on a tracked position and/or orientation of the operator and/or tool. The weld monitoring system may automatically provide appropriate welding instructions to the operator based on the identified job and/or part. The weld monitoring system may also identify appropriate equipment and/or devices for the identified job and/or part, and/or configure the equipment and/or devices appropriately for the identified job and/or part.

The automatic identification of the job and/or part on which the operator and/or tool is engaged in working ensures that that the weld monitoring system can still monitor effectively even if operators neglect to provide input regarding their activities. Additionally, the automatic provision of welding instructions for the identified job/part may reduce the risk of erroneous welding instructions being provided and/or followed, boost productivity, and/or help to ensure a quality welding-type operation is performed. The automatic identification of appropriate welding-type equipment and/or devices for the identified job/part, and/or the automatic configuration of the identified equipment/devices for the identified job/part, may likewise boost productivity and/or help to ensure a quality welding-type operation is performed.

Some examples of the present disclosure relate to a welding system, comprising: a tracking system configured to track a tool position or a tool orientation of a welding-type tool, or an operator position or an operator orientation of a welding operator; a welding device configured to provide welding-type power or a welding consumable to the welding-type tool during a welding-type operation; memory circuitry configured to store: a plurality of welding job identifiers or a plurality of part identifiers, a plurality of welding parameter sets, a plurality of stored positions, a parameter association between each welding parameter set, of the plurality of welding parameter sets, and a welding job identifier of the plurality of welding job identifiers, or a part identifier of the plurality of part identifiers, and a position association between each welding job identifier of the plurality of welding job identifiers, or each part identifier of the plurality of part identifiers, and a stored position of the plurality of stored positions; and processing circuitry configured to: determine whether the torch position or the operator position is proximate a particular stored position of the plurality of stored positions, in response to determining the torch position or the operator position is proximate the particular stored position, identify a particular job identifier, or a particular part identifier, associated with the particular stored position, identify a particular welding parameter set, of the plurality of welding parameter sets, that is associated with the particular job identifier, or the particular part identifier, and set one or more device parameters of the welding device based on one or more welding parameters of the particular welding parameter set.

In some examples, the welding device comprises a welding-type power supply, a welding wire feeder, or a gas supply device. In some examples, the one or more device parameters comprises one or more of a target wire feed speed, a wire material type, a wire diameter, a welding-type process, an alternating current (AC) balance, a target output electrical current, a target output electrical voltage, an target output electrical frequency, a target gas flow rate, a gas type, a cooling system parameter, a burnback parameter, or a crater fill parameter. In some examples, the tracking system is configured to track the operator by tracking a mobile device of the operator or a piece of wearable apparel worn by the operator.

In some examples, the tracking system comprises one or more camera, optical, magnetic, ultrasonic, acoustic, radio frequency identification (RFID), near field communication (NFC), or Bluetooth sensors. In some examples, the memory circuitry further stores: a plurality of welding device identifiers, and a device association between each welding device identifier of the plurality of welding device identifiers and one or more stored positions of the plurality of stored positions, and the processing circuitry is further configured to, in response to determining the torch position or the operator position is proximate the particular stored position: identify a particular welding device identifier, of the plurality of welding device identifiers, that is associated with the particular stored position, and identify the welding device associated with the particular welding device identifier. In some examples, the processing circuitry is further configured to disable the welding device or the welding-type tool in response to determining: the torch position or the operator position is proximate the particular stored position, and the particular stored position, is not associated with any particular welding job identifier or any particular part identifier.

Some examples of the present disclosure relate to a welding system, comprising: a tracking system configured to track a tool position or a tool orientation of a welding-type tool, or an operator position or an operator orientation of a welding operator; memory circuitry configured to store: a plurality of welding job identifiers or a plurality of part identifiers, a plurality of welding instruction sets, a plurality of stored positions, an instruction association between each welding instruction set of the plurality of welding instruction sets and a welding job identifier of the plurality of welding job identifiers, or a part identifier of the plurality of part identifiers, and a position association between each welding job identifier of the plurality of welding job identifiers, or each part identifier of the plurality of part identifiers, and a stored position of the plurality of stored positions; and processing circuitry configured to: determine whether the torch position or the operator position is proximate a particular stored position of the plurality of stored positions, in response to determining the torch position or the operator position is proximate the particular stored position: identify a particular job identifier, or a particular part identifier, associated with the particular stored position, identify a particular welding instruction set, of the plurality of welding instruction sets, that is associated with the particular job identifier, or the particular part identifier, and output one or more welding instructions of the particular welding instruction set.

In some examples, the one or more welding instructions pertain to how or when to perform a welding-type operation at the particular stored position. In some examples, the one or more welding instructions comprise one or more visual, haptic, or audio instructions. In some examples, the welding system further comprises a user interface, the processing circuitry being configured to output the one or more welding instructions via the user interface.

In some examples, the one or more welding instructions comprise one or more welding technique parameters representative of a technique used to perform the welding-type operation at the particular stored position. In some examples, the one or more welding technique parameters comprise one or more of a work angle of the welding-type tool, a travel angle of the welding-type tool, a travel speed of the welding-type tool, a travel direction of the welding-type tool, an aim of the welding-type tool, a distance between a contact tip of the welding-type tool and a workpiece being operated on, a weave frequency of the welding-type tool, a weave width of the welding-type tool, or a dwell time of the welding-type tool. In some examples, the tracking system is configured to track the operator by tracking a mobile device of the operator or a piece of wearable apparel worn by the operator, or the tracking system comprises one or more camera, optical, magnetic, ultrasonic, acoustic, radio frequency identification (RFID), near field communication (NFC), or Bluetooth sensors.

Some examples of the present disclosure relate to a method, comprising: tracking, via a tracking system, a tool position or a tool orientation of a welding-type tool, or an operator position or an operator orientation of a welding operator; determining, via processing circuitry, whether the torch position or the operator position is proximate a particular stored position of a plurality of stored positions stored in memory circuitry, the memory circuitry further storing: a plurality of welding job identifiers or a plurality of part identifiers, a plurality of welding parameter sets, a plurality of welding instruction sets, a parameter association between each welding parameter set, of the plurality of welding parameter sets, and a welding job identifier of the plurality of welding job identifiers, or a part identifier of the plurality of part identifiers, an instruction association between each welding instruction set of the plurality of welding instruction sets and a welding job identifier of the plurality of welding job identifiers, or a part identifier of the plurality of part identifiers, and a position association between each welding job identifier of the plurality of welding job identifiers, or each part identifier of the plurality of part identifiers, and a stored position of the plurality of stored positions; in response to determining the torch position or the operator position is proximate the particular stored position, identifying, via the processing circuitry, a particular job identifier of the plurality of welding job identifiers, or a particular part identifier of the plurality of part identifiers, associated with the particular stored position, identifying, via the processing circuitry, a particular welding parameter set, of the plurality of welding parameter sets, that is associated with the particular job identifier, or the particular part identifier, identifying, via the processing circuitry, a particular welding instruction set, of the plurality of welding instruction sets, that is associated with the particular job identifier, or the particular part identifier, setting one or more device parameters of a welding device based on one or more welding parameters of the particular welding parameter set, the welding device being configured to provide welding-type power or a welding consumable to the welding-type tool during a welding-type operation, and outputting one or more welding instructions of the particular welding instruction set.

In some examples, the welding device comprises a welding-type power supply, a welding wire feeder, or a gas supply device. In some examples, the one or more device parameters comprises one or more of a target wire feed speed, a wire material type, a wire diameter, a welding-type process, an alternating current (AC) balance, a target output electrical current, a target output electrical voltage, an target output electrical frequency, a target gas flow rate, a gas type, a cooling system parameter, a burnback parameter, or a crater fill parameter. In some examples, the one or more welding instructions pertain to how or when to perform the welding-type operation at the particular stored position.

In some examples, the one or more welding instructions comprise one or more visual, haptic, or audio instructions, and the one or more welding instruction are outputted via a user interface. In some examples, the tracking system is configured to track the operator by tracking a mobile device of the operator or a piece of wearable apparel worn by the operator, or the tracking system comprises one or more camera, optical, magnetic, ultrasonic, acoustic, radio frequency identification (RFID), near field communication (NFC), or Bluetooth sensors.

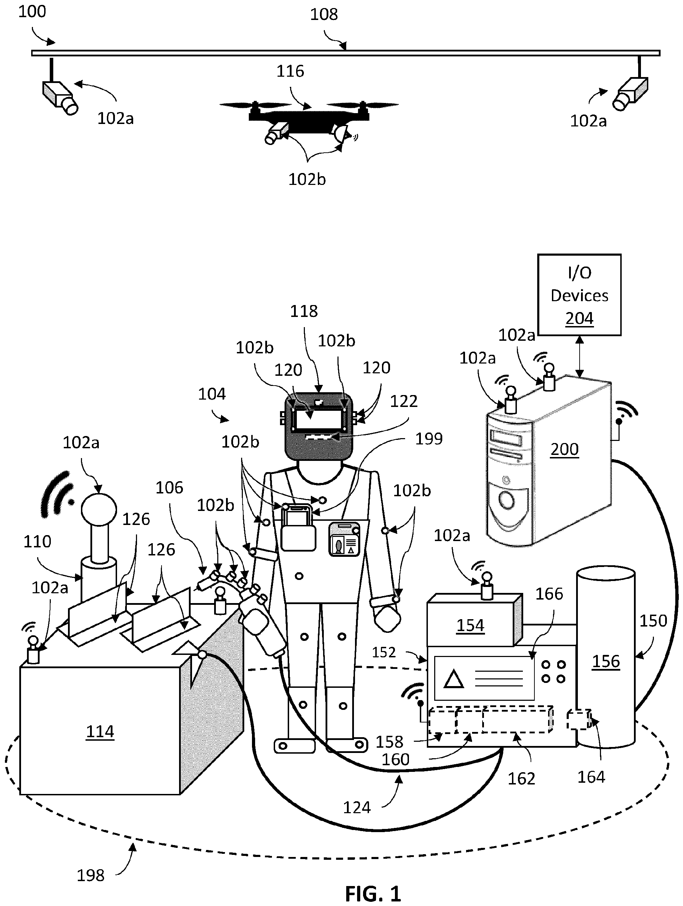

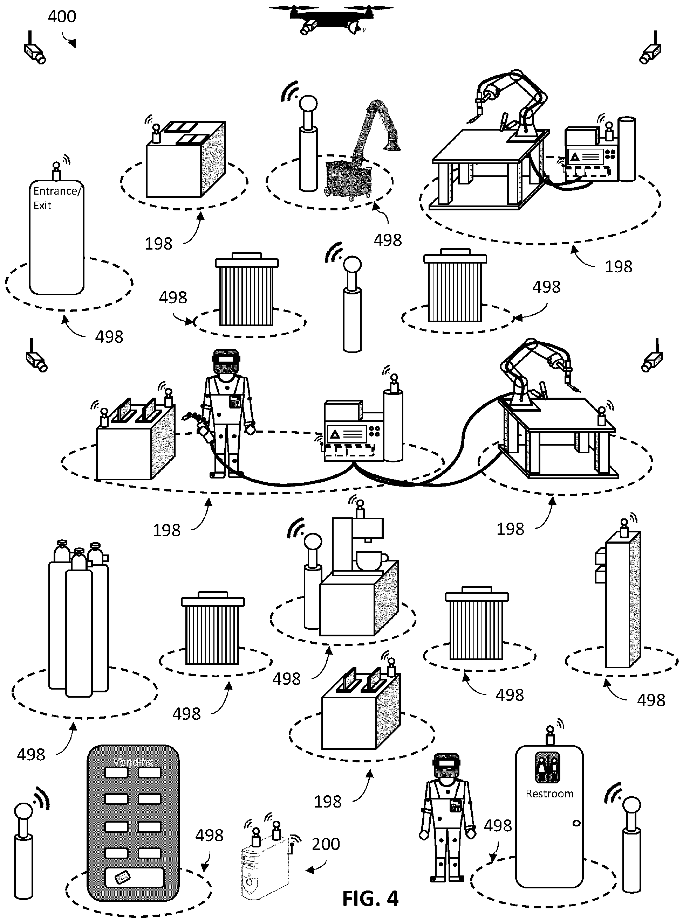

FIG. 1 shows an example of a weld monitoring system 100. As shown, the weld monitoring system 100 includes a computing system 200 and several position tracking sensors 102. In some examples, the weld monitoring system 100 may use the computing system 200 and/or tracking sensors 102 to monitor the welding-type operations of an operator 104 and/or welding-type tool 106 (e.g., a welding torch/gun) within a welding area/cell 198. In some examples, the weld monitoring system 100 may further monitor the welding-type operations of the operator 104 and/or welding-type tool 106 in other welding areas/cells 198 and/or in non-welding areas 498 (see, e.g., FIG. 4).

In some examples, the weld monitoring system 100 may use a variety of tracking sensors 102 to track the position and/or orientation of the operator 104 and/or welding-type tool 106. For example, some of the tracking sensors 102 shown in FIG. 1 are fixed sensors 102a that are shown attached to a fixture 108 (e.g., ceiling, floor, pillar, wall, door, railing, etc.). In some examples, the fixture 108 may be a building fixture 108 or a fixture 108 of a (e.g., manufacturing) facility 400 (see, e.g., FIG. 4). Some of the fixed sensors 102a are shown affixed to and/or integrated with a stanchion 110 that may be attached to a fixture 108 and/or weighted such that the stanchion 110 is substantially difficult to lift and/or move by hand. Some of the fixed sensors 102a are shown as affixed to welding equipment 150 and/or a welding bench 114. While shown as being attached to the welding equipment 150 and/or welding bench 114, in some examples, one or more of the fixed sensors 102a may instead be integrated into the welding equipment 150 and/or welding bench 114.

Some of the tracking sensors 102 shown in FIG. 1 are mobile tracking sensors 102b. For example, mobile tracking sensors 102b are shown attached to an unmanned aerial vehicle (UAV) 116, the operator 104 held welding-type tool 106, a mobile device 199 of the operator 104, an operator 104 worn welding helmet 118, and other operator 104 worn apparel (e.g., pants, shirt, vest, boots, gloves, badge, etc.). While the operator 104 is shown wearing a welding helmet 118 in the example of FIG. 1, in some examples, the operator 104 may alternatively, or additionally, wear (and/or the mobile sensors 102b may alternatively, or additionally, be attached to) some other headwear (e.g., goggles, face shield, headphones, earbuds, etc.).

In some examples, one or more of the tracking sensors 102 may comprise camera, optical, magnetic, ultrasonic, acoustic, global positioning system (GPS), radio frequency identification (RFID), near field communication (NFC), and/or Bluetooth sensors. In some examples, the tracking sensors 102 are configured to capture sensor data that allows the computing system 200 to identify, monitor, and/or track the positions and/or orientations of the operator 104 and/or the welding-type tool 106. In some examples, one or more of the (e.g., mobile) sensors 102 may comprises active or passive markers that may be detected, recognized, and/or tracked by the other sensors 102 and/or the computing system 200 (e.g., via analysis of the sensor data).

In some examples, one or more of the tracking sensors 102 may include communication circuitry (and/or antennae) enabling the tracking sensors 102 to communicate sensor data captured and/or detected by the tracking sensors 102 to the computing system 200 (and/or other tracking sensors 102). In some examples, one or more of the tracking sensors 102 may be used to route, repeat, and/or amplify a communication signal sent by another tracking sensor 102 (e.g., to ensure the communication signal reaches the computing system 200).

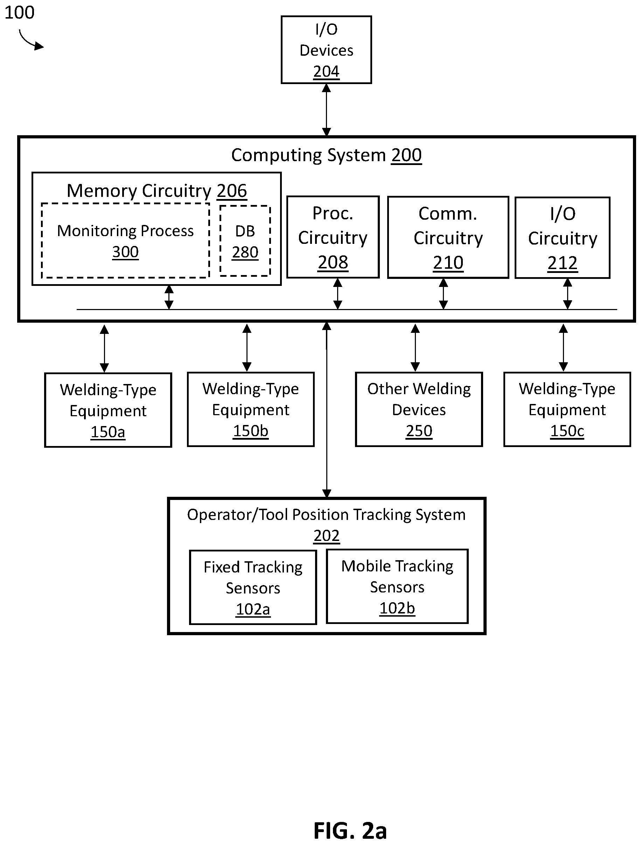

In the example of FIG. 1, the computing system 200 is shown as having its own fixed tracking sensors 102a. In some examples, one or more of the tracking sensors 102a may be integrated into (e.g., instead of attached to) the computing system 200. The computing system 200 is further shown as having an antenna for communicating with the tracking sensors 102a (and/or other tracking sensors 102), as well as other devices. In some examples, the antenna may be part of computing communication circuitry 210 of the computing system 200 (see, e.g., FIG. 2a).

In the example of FIG. 1, the computing system 200 is also shown as having, and/or being connected to, computing input/output (I/O) devices 204. In some examples, the computing I/O devices 204 may include one or more computer mice, keyboards, (e.g., touch) display screens, speakers, microphones, haptic devices, lights, buttons, knobs, and/or other devices. In some examples, the tracking sensors 102 of the computing system 200 may be considered computing I/O devices 204.

In some examples, one or more helmet I/O devices 120 of the welding helmet 118 may be used as computing I/O devices 204. In some such examples, helmet circuitry 122 of the welding helmet 118 may communicate with the computing system 200 to relay I/O signals. In some examples, the helmet circuitry 122 of the welding helmet 118 may be used to implement some or all of the computing system 200.

In the example of FIG. 1, the computing system 200 is shown with a wired connection to welding-type equipment 150 in the welding area/cell 198. In some examples, the computing system 200 may additionally, or alternatively, be in wireless communication with the welding-type equipment 150 (and/or other welding-type equipment 150).

In the example of FIG. 1, the welding-type equipment 150 is shown as being connected to the welding-type tool 106 via welding cable 124. In some examples, the welding-type equipment 150 may deliver welding-type electrical power and/or consumables (e.g., welding wire and/or shielding gas) to the welding-type tool 106 via the welding cable 124. While only one cable 124 is shown in the example of FIG.1 for the sake of simplicity and explanation, in some examples, the welding cable 124 may comprise a bundle of cables.

The welding-type equipment 150 is shown as including a welding-type power supply 152, a welding wire feeder 154, and a gas supply 156, coupled together. While shown as being a collection of connected but separate devices, in some examples, the welding-type equipment 150 may instead be integrated into fewer devices, and/or a single device (e.g., a combined welding-type power supply 152 and wire feeder 154).

In some examples, the wire feeder 154 houses a wire spool that is used to provide the welding-type tool 106 with a wire electrode (e.g., via the welding cable 124). In some examples, the wire feeder 154 further includes motorized rollers configured to feed the wire electrode to the tool 106 (e.g., from the spool) and/or retract the wire electrode from the tool 106 (e.g., back to the spool).

In some examples, the gas supply 156 supplies a shielding gas and/or shielding gas mixtures to the tool 106 (e.g., via welding cable 124). A shielding gas, as used herein, may refer to any gas (e.g., CO2, argon) or mixture of gases that may be provided to the tool 106 and/or welding-type operation in order to provide a particular local atmosphere (e.g., shield the arc, improve arc stability, limit the formation of metal oxides, improve wetting of the metal surfaces, alter the chemistry of the weld deposit, and so forth).

In some examples, the welding-type power supply 152 supplies welding-type power to the tool 106 (e.g., via the welding cable 124). In the example of FIG. 1, the welding-type power supply 152 is shown as including power communication circuitry 158, power control circuitry 160, power conversion circuitry 162, a gas valve 164, and an operator interface 166.

The operator interface 166 is shown as comprising one or more adjustable inputs (e.g., knobs, buttons, switches, keys, etc.) and/or outputs (e.g., display screens, lights, speakers, etc.). In some examples, the operator 104 may use the operator interface 166 to enter and/or select one or more welding parameters (e.g., target output voltage, target output current, target output frequency, gas type, target preflow/postflow/purge/primary gas flow rate, target wire feed speed, wire type, wire diameter, workpiece material type, welding-type process (e.g., pulse, short circuit, etc.), alternating current (AC) balance, a burnback parameter, a crater fill parameter, a cooling system parameter, etc.). While shown as being part of the power supply 152, in some examples, the operator interface 166 may instead be part of a different part of the welding-type equipment 150.

As mentioned above, the welding-type power supply 152 is shown as including power communication circuitry 158. In some examples, the power communication circuitry 158 may include one or more antennas, wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the power communication circuitry 158 may be configured to facilitate communication via one or more wired media and/or protocols (e.g., Ethernet cable(s), universal serial bus cable(s), etc.) and/or wireless mediums and/or protocols (e.g., near field communication (NFC), ultra high frequency radio waves (commonly known as Bluetooth), IEEE 802.11x, Zigbee, HART, LTE, Z-Wave, WirelessHD, WiGig, etc.).

The welding-type power supply 152 is further shown as including power conversion circuitry 162. In some examples, the power conversion circuitry 162 is configured to receive input power (e.g., from mains power, a generator, etc.) and convert the input power to welding-type output power. In some examples, the power conversion circuitry 162 may include circuit elements (e.g., transformers, rectifiers, capacitors, inductors, diodes, transistors, switches, and so forth) capable of converting the input power to output power.

In some examples, the power conversion circuitry 162 may also include one or more controllable circuit elements. In some examples, the controllable circuit elements may comprise circuitry configured to change states (e.g., fire, turn on/off, close/open, etc.) based on one or more control signals. In some examples, the state(s) of the controllable circuit elements may impact the operation of the power conversion circuitry 162, and/or impact characteristics (e.g., current/voltage magnitude, frequency, waveform, etc.) of the output power provided by the power conversion circuitry 162. In some examples, the controllable circuit elements may comprise, for example, switches, relays, transistors, etc. In examples where the controllable circuit elements comprise transistors, the transistors may comprise any suitable transistors, such as, for example MOSFETs, JFETs, IGBTs, BJTs, etc.

As shown, the welding-type power supply 152 further includes control circuitry 160 electrically coupled to and/or configured to control the power conversion circuitry 162 and/or power communication circuitry 158. In some examples, the control circuitry 160 may include processing circuitry (and/or one or more processors) as well as analog and/or digital memory. In some examples, the control circuitry 160 is configured to control (e.g., the controllable circuit elements of) the power conversion circuitry 162, so as to ensure the power conversion circuitry 162 generates the appropriate welding-type output power for carrying out the desired welding-type operation. Though not shown for the sake of simplicity, in some examples, the control circuitry 160 may be further coupled to the operator interface 166, and/or configured to control the power conversion circuitry 162 according to inputs received via the operator interface 166.

In some examples, the control circuitry 160 is also electrically coupled to and/or configured to control the wire feeder 154, the gas supply 156, and/or a gas valve 164 (e.g., according to inputs received via the operator interface 166). In some examples, the control circuitry 160 may control the wire feeder 154 to output wire at a target speed and/or direction. For example, the control circuitry 160 may control the motor of the wire feeder 154 to feed the wire electrode to (and/or retract the wire electrode from) the tool 106 at a target speed. In some examples, the welding-type power supply 152 may control the gas supply 156 and/or gas valve 164 to output and/or allow for flow of a target type and/or amount gas.

In some examples, a welding-type operation (and/or welding process) may be initiated when the operator 104 activates (e.g., a trigger of) the welding-type tool 106. During the welding-type operation, the welding-type equipment may provide welding-type power and/or consumables to the welding-type tool 106 for the welding-type operation. The welding-type tool 106 may use the welding-type power and/or consumables to operate upon one or more workpieces 126.

When the welding-type operation is finished, the operator 104 may deactivate the welding-type tool 106 (e.g., by releasing the trigger). In some examples, the control circuitry 160 may detect activation and/or deactivation of the welding-type tool 106, and control the delivery and/or cessation of delivery of the welding-type power and/or consumables to the welding-type tool 106. In some examples, the control circuitry 160 may further control the power communication circuitry 158 to send one or more signals to the computing system 200 indicating when the welding-type tool 106 is activated and/or deactivated (and/or when the welding-type operation begins and/or ends).

FIG. 2a is a block diagram showing further details of the weld monitoring system 100 and, in particular, the components and/or connections of the computing system 200 of the weld monitoring system 100. In some examples, the computing system 200 may be implemented by way of a desktop computer, laptop computer, tablet computer, and/or a server computer. In the example of FIG. 2a, the computing system 200 is shown in communication with several different pieces of welding-type equipment 150, as well as other welding devices 250. In some examples, the other welding devices 250 may include the welding-type tool 106 (and/or other welding-type tools 106), the welding helmet 118 (and/or other welding helmets 118), one or more fume extractors, one or more welding robots, one or more cooling systems, and/or other relevant devices.

In the example of FIG. 2a, the computing system 200 is further shown as being in communication with a tracking system 202. The tracking system 202 is shown as being comprised of the fixed tracking sensors 102a and mobile tracking sensors 102b. In some examples, the tracking system 202 may further include additional tracking sensors.

The computing system 200 is also shown as comprising computing memory circuitry 206, computing processing circuitry 208, computing communication circuitry 210, and computing I/O circuitry 212. As shown, the computing memory circuitry 206, computing processing circuitry 208, computing communication circuitry 210, and computing I/O circuitry 212 are interconnected with one another via a common electrical bus.

In some examples, the computing I/O circuitry 212 may comprise one or more drivers for the computing I/O devices 204. In some examples, the computing I/O circuitry 212 may be configured to generate one or more signals representative of input received via the computing I/O devices 204, and provide the signal(s) to the bus. In some examples, the computing I/O circuitry 212 may also be configured to computing I/O devices 204 to generate one or more outputs in response to one or more signals (e.g., received via the bus).

In some examples, the computing communication circuitry 210 may comprise one or more antennas, wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the computing communication circuitry 210 may be configured to facilitate communication via one or more wired media and/or protocols (e.g., Ethernet cable(s), universal serial bus cable(s), etc.) and/or wireless mediums and/or protocols (e.g., near field communication (NFC), ultra high frequency radio waves (commonly known as Bluetooth), IEEE 802.11x, Zigbee, HART, LTE, Z-Wave, WirelessHD, WiGig, etc.).

In some examples, the computing processing circuitry 208 may comprise one or more processors. In some examples, the computing processing circuitry 208 may comprise one or more drivers for the tracking system 202. In some examples, the computing processing circuitry 208 may be configured to execute machine readable instructions stored in the computing memory circuitry 206.

In the example of FIG. 2a, the computing memory circuitry 206 includes (and/or stores) a database 280. In some examples, the database 280 may store data relating to, and/or representative of, welding jobs (and/or welding projects), parts manufactured through the welding jobs (e.g., via the joining/welding of two or more workpieces 126), positions (e.g., where the welding jobs occur and/or parts are manufactured), operators 104 (e.g., who work on manufacturing the parts during the welding jobs), tools 106 (e.g., used by the operators 104 to manufacture the parts during the welding jobs), welding parameters (e.g., used by welding-type equipment 150 and/or other welding devices 250 during the welding job and/or part manufacture), and/or welding instructions (e.g., to help guide an operator 104 through manufacturing the parts during the welding jobs). In some examples, the database 280 may additionally store data relating to, and/or representative of, associations and/or relationships between the aforementioned data.

While shown as part of the computing memory circuitry 206 of the computing system 200 in FIG. 2a, in some examples, the database 280 may instead be separate from the computing memory circuitry 206, and/or separate from (yet in communication with) the computing system 200. While one database 280 is shown in the example of FIG. 2a for the sake of simplicity, in some examples, the weld monitoring system 100 may include several databases 280.

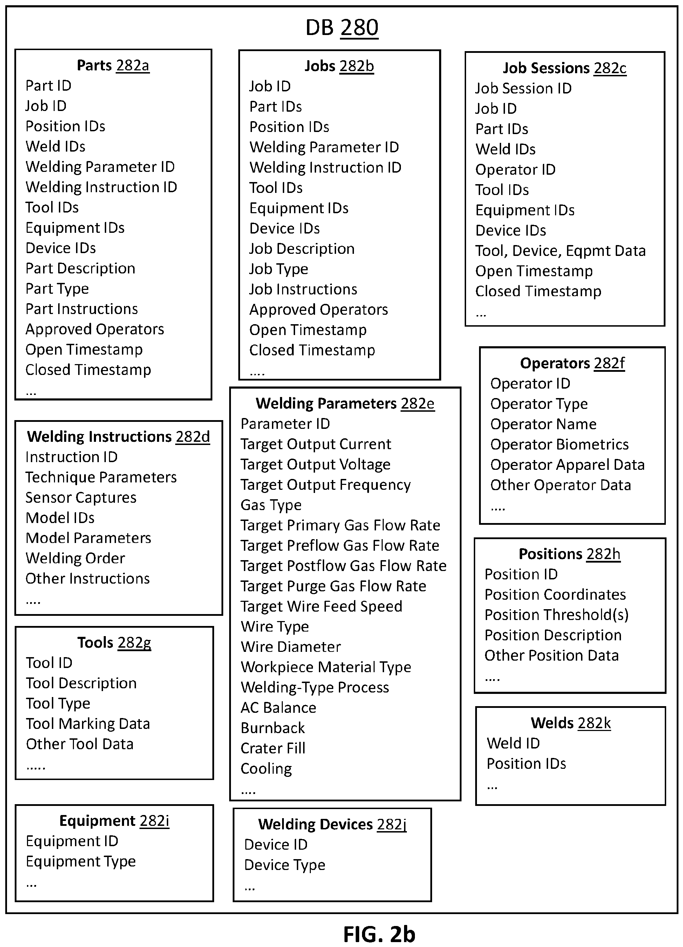

FIG. 2b shows an example design of the database 280. Though the database 280 is depicted as a relational database 280, in some examples, one or more other types of databases 280 may be used.

The database 280 is shown as organizing data in and/or according to a set of tables 282. In particular, the database 280 is shown as organizing data in and/or according to a Parts table 282a, a Jobs table 282b, a Job Sessions table 282c, a Welding Instructions table 282d, a Welding Parameters table 282e, an Operators table 282f, a Tools table 282g, a Positions table 282h, an Equipment table 282i, a Welding Devices table 282j, and a Welds table 282k. In some examples, more or fewer tables 282 (and/or columns of the tables 282) may be used. While some example tables 282 are shown in the example of FIG. 2b as belonging to the database 280, in some examples, the tables 282 may be spread across several databases 280.

In some examples, related data in may be organized (and/or associated together) in a row of a particular table 282. Additionally, the data for a particular row of a table 282 may be organized according to the columns of the table 282. While each table 282 has its own distinct columns, all the tables 282 are shown as including at least an identifier column.

For example, the Parts table 282a includes a Part ID column, the Jobs table 282b includes a Job ID column, the Job Sessions table 282c includes a Job Session ID column, the Welding Instructions table 282d includes an Instruction ID column, the Welding Parameters table 282e includes a Parameter ID column, and so on and so forth. A unique (e.g., alphanumeric) identifier may be generated and/or stored in the ID column of a table 282 for each row of the table 282. In some examples, the identifier data in the ID column may be used to identify and/or reference the row of the table 282 to which identifier data belongs.

Additionally the row identifier data may be used to associate and/or relate together information (and/or rows) in different tables 282. For example, each row in the Parts table 282a is associated with one or more jobs via the Job IDs column of the Parts table 282a, and the Job ID column of the Jobs table 282b. Likewise, each row of the Jobs table 282b is associated with one or more parts via the Part IDs column of the Jobs table 282b and the Part ID column of the Parts table 282a (though, in some examples, a job may not be associated with a part). And each row of both the Parts table 282a and the Jobs table 282b is associated with one or more positions via the Position IDs columns of the Parts table 282a and the Jobs table 282b, as well as the Position ID column of the Positions table 282h.

In this way, the database 280 may organize and/or associate together a substantial amount of information relating to the jobs and/or parts on which an operator 104 and/or welding-type tool 106 is working, as well as the positions where work relating to the jobs/parts takes place, the welding-type equipment 150/devices 250 used for the jobs/parts, the welding parameters used by welding-type equipment 150/ devices 250, and/or the welding instructions for each job/part. Such organization may enable the monitoring system 100 to automatically output stored welding instructions, and/or automatically configure particular welding-type equipment 150/devices 250, for a particular job/part when an operator 104 and/or tool 106 are detected to be proximate a particular stored position associated with the job/part.

In the example of FIG. 2a, the computing memory circuitry 206 further includes (and/or stores) a monitoring process 300. In some examples, the monitoring process 300, may comprise machine readable instructions configured for execution by the system computing processing circuitry 208. In some examples, the computing memory circuitry 206 may further include (and/or store) certain parameters and/or thresholds used in the monitoring process 300.

In some examples, during the monitoring process 300, the monitoring system 100 may track the position(s) and/or orientation(s) of an operator 104 and/or tool 106 using the tracking system 202, and use the tracked positions/orientation of the operator 104 and/or tool 106 to identify a job and/or part being worked on by the operator 104. The system 100 may then use the database 280 to locate welding instructions associated with the job/part, and output the recorded welding instructions to help guide the operator 104 through the welding-type operation. The system 100 may further use the database 280 to identify welding-type equipment 150 and/or other welding devices 250 to use during the welding-type operation, as well as welding parameters to configure the welding-type equipment 150 and/or other welding devices 250.

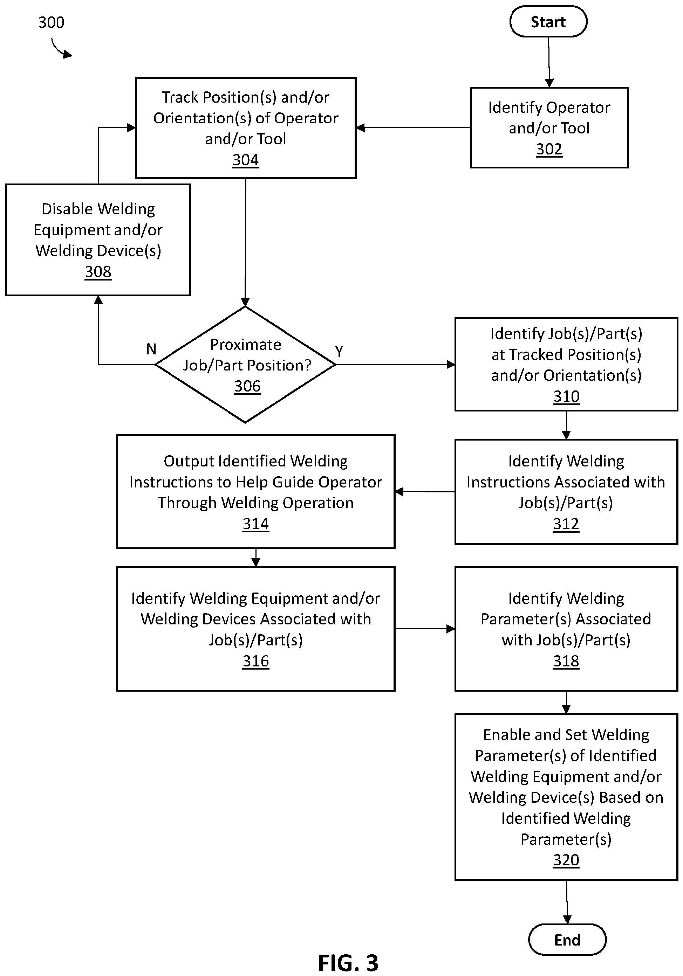

FIG. 3 is a flowchart showing an example operation of the monitoring process 300. While the monitoring process 300 is sometimes discussed below as performing certain actions, this is a shorthand for referring to action taken during the monitoring process 300 by one or more components of the weld monitoring system 100 (e.g., tracking sensors 102, computer processing circuitry 208, computing I/O devices 204, etc.). While shown as single processes in the example of FIG. 3, in some examples, multiple instances of the monitoring process 300 may execute simultaneously and/or in parallel.

In the example of FIG. 3, the monitoring process 300 begins at block 302 where the monitoring process 300 identifies the operator 104 and/or tool 106 that should be tracked during the monitoring process 300 (e.g., using the tracking system 202). In some examples, the particular operator 104 and/or tool 106 may be identified using an operator identifier and/or tool identifier used to reference information about the particular operator 104 and/or tool 106 in the database 280 (e.g., in the Operators table 282f and/or Tools table 282g). In some examples, identifying the operator 104 may involve identifying the apparel being worn by the operator 104 and/or the mobile device 199 used by the operator 104.

In some examples, the particular operator 104 may login to the system 100 (e.g., via the I/O devices 204), with operator credentials that are associated with identifying information about the operator 104 and/or tool 106 (e.g., via one or more accounts and/or one or more rows of Operators table 282f). As another example, the operator 104 may have a badge, ID card, mobile device 199, and/or other item that stores identifying information, and the identifying information may be read and/or scanned off the badge, ID card, mobile device 199, and/or other item (e.g., by a tracking sensor 102 of the computing system 200). As another example, the operator 104 may provide biometric information (e.g., read/detected by one or more of the mobile tracking sensors 102b of the helmet 118), and the biometric information may be used as identifying input.

In examples where the operator 104 provides identifying input, the identifying input may be associated in the database 280 with information about the mobile device 199 of the operator, the operator 104 worn apparel, and/or the tool 106. For example, in FIG. 2b, the Operators table 282f has Operator Apparel Data associated with each Operator ID, and the Tools table 282g has Tool Marking Data associated with each Tool ID. In some examples, the Other Operator Data of the Operators table 282f may store data pertaining to the mobile device 199. The monitoring process 300 may thereby query the database 280 using the identifying input and obtain the information necessary to identify, recognize, and/or track the operator 104 and/or tool 106.

In some examples, the monitoring process 300 may be able to track the operator 104 and/or the tool 106 without the need for any input from the operator 104 (or with no more than an indication of the operator/tool identifier(s) to be tracked). For example, the mobile device 199 and/or the welding helmet 118 (and/or other apparel worn by the operator 104) may be imprinted with (and/or have attached) the operator identifier of the operator 104. As another example, the tool 106 may be imprinted with (and/or have attached) the tool identifier of the tool 106. In such examples, the tracking system 202 may be able to recognize and/or read the operator ID and/or tool ID from the tool 106 and/or (e.g., apparel and/or mobile device 199 of) the operator 104, and thereby recognize which operator 104 and/or tool 106 is being tracked. As another example, the mobile tracking sensors 102b attached to the tool 106, mobile device 199, and/or apparel of the operator 104 may be encoded with the operator ID and/or tool ID, and/or communicate the operator ID and/or tool ID to the fixed tracking sensors 102a during tracking of the tool 106 and/or operator 104.

In the example of FIG. 3, after block 302, the monitoring process 300 tracks the position(s) and/or orientation(s) of the tool 106 and/or the operator 104 at block 304. In some examples, the tracking may be performed by the tracking system 202 and/or computing system 200 of the weld monitoring system 100. In some examples, the tracking may involve the capture of sensor data by the tracking system 202.

In some examples, the tracking may involve communications between tracking sensors 102 of the tracking system 202. In some examples, the tracking may involve analysis of the sensor data and/or the communications of the tracking sensors 102. In some examples, the tracking may involve analysis of detected and/or stored positions of certain (e.g., fixed) tracking sensors 102. In some examples, the tracking may involve time of flight, trilateration, triangulation, and/or computer vision analysis. In examples where the tracking fails for some reason (e.g., operator 104 and/or tool 106 no longer in facility 400) the monitoring process 300 may use one or more null values for the position(s) and/or orientation(s).

While, in some examples, position tracking data might be considered more valuable with respect to the tool 106 than the operator 104, there may be instances in which the tool 106 is not known, and/or is unable to be tracked for some reason. In such examples, it may be helpful to track the operator 104 as an approximation of the position of the tool 106. In some examples, the orientation of the operator 104 may refer to the direction the operator 104 (and/or the face, torso, feet, etc. of the operator 104) is facing, and/or the orientation of different portions of the operator 104 (e.g., hands, feet, arms, legs, head, etc.) relative to one another and/or some reference frame.

As shown, after block 304, the monitoring process 300 proceeds to block 306 where the monitoring process 300 determines whether the tracked position(s) of the tool 106 and/or the operator 104 are proximate a position of a job and/or part. For example, the database 280 may store several stored positions (e.g., in the Positions table 282h), and some of those stored positions may be associated with a job and/or part (e.g., via job/part identifiers in the Job/Part tables 282), while other stored positions may not be associated with any job and/or part. The stored positions associated with a job/part may correspond to actual positions in a facility 400 (see, e.g., FIG. 4).

For example, there may be a welding job that entails manufacturing a part (e.g., comprised of two or more workpieces 126) via one or more welds (e.g., at one or more joints between workpieces 126). And welding-type operations relating to that job (and/or part manufacture) may be slated to occur in certain welding areas 198 (e.g., having certain workpieces 126 and/or proximate certain equipment 150; see, e.g., FIG. 4). In some examples, the database 280 may associate a job and/or part with one or more stored positions in and/or near the appropriate welding area(s) (e.g., using job, part, and/or position identifiers).

In the example database 280 shown in FIG. 2b, the Positions table 282h is designed to store one or more thresholds associated with each position. A position combined with a threshold may define a sphere having a center at the position and a radius defined by the threshold. Thus, at block 306, the monitoring process 300 may determine whether the tracked position(s) of the tool 106 and/or operator 104 are within one or more spheres defined by one or more positions and/or thresholds associated with a job/part stored in the database 280.

In some examples, a position combined with a threshold may instead define an infinite and/or unbounded cylinder. For example, the finite threshold(s) may only be applied to two coordinate axis, and an infinite threshold may be applied to the third (e.g., height) coordinate axis. Alternatively, some other threshold(s) may be applied to define a shape that is bounded in one (e.g., height) coordinate axis at, near, or above/below the ceiling/floor. This may prevent an operator 104 and/or tool 106 from being determined not to be proximate a position because the position of the operator 104 and/or tool 106 is too high/low (e.g., close to a ceiling/floor of the facility 400).

In some examples, a position may be associated with two or more thresholds. In some such examples, overlapping spheres and/or cylinders may be defined. In some such examples, the positions where the spheres and/or cylinders do not overlap may be considered outer boundary positions, where orientation(s) of the tool 106 and/or operator 104 is also considered when determining position proximity at block 306. For example, a tool 106 and/or operator 104 may not be considered proximate a position at block 306 if the tool 106 and/or operator 104 is positioned at an outer boundary position and the orientation of the tool 106 and/or operator 104 is not oriented towards the position (e.g., within some other threshold associated with the position). In some examples, the vertical component of the orientation may be disregarded similar to what is discussed above to avoid too high/low situations.

In some examples, the monitoring process 300 may use a different procedure (e.g., rather than relying on thresholds) for determining whether the tracked position(s) of the tool 106 and/or the operator 104 are proximate a position of a job and/or part at block 306. For example, the monitoring process 300 might identify which stored position (e.g., of a job and/or part) is closest to the tracked position(s) of the tool 106 and/or the operator 104, and identify the tool 106 and/or the operator 104 as being proximate that stored position. As another example, the monitoring process 300 may make use of one or more artificial intelligence and/or machine learning techniques to make a determination as to whether the tracked position(s) of the tool 106 and/or the operator 104 are proximate a position of a job and/or part.

In some examples, the monitoring process 300 may receive an input (e.g., via the I/O devices 204) that manually identifies the operator 104 and/or tool 106 as working on a particular job and/or part. In such examples, the monitoring process 300 may determine that the tool 106 and/or operator 104 is proximate the job and/or part as a matter of course, regardless of the actual position and/or orientation of the operator 104 and/or tool 106.

In some examples, the operator 104 and/or tool 106 may only be approved to work on one or more particular jobs and/or parts (e.g., via associations in the Parts and/or Jobs tables 282). In such examples, the monitoring process 300 may only determine whether the tracked position(s) of the tool 106 and/or the operator 104 are proximate the approved and/or manually identified jobs and/or parts at block 306.

FIG. 4 is a diagram showing an example facility 400 having numerous welding areas 198 at different positions within the facility 400. As shown, some welding areas 198 differ from others, be it with respect to the proximity of welding-type equipment 150, the type of workpieces 126, the type of workbench 114 (e.g., with or without a robot), and/or other aspects. The difference in welding areas 198 may impact whether certain welding areas 198 are or are not used for certain jobs/parts.

In the example of FIG. 4, several tracking sensors 102 are positioned around the facility 400 and/or welding areas 198. In some examples, the tracking sensors 102 around the facility 400 may allow the weld monitoring system 100 to track positions and/or orientations of operators 104 and/or tools 106 in the facility 400, and/or determine whether those positions correspond to a job/part position (and/or the position of an associated welding area 198). In some examples, the welding areas 198 may be spaced (and/or the positions and/or thresholds in the database 280 configured) such that an operator 104 and/or tool 106 will never be determined to be proximate two different job/part positions (and/or two different welding areas 198).

In the example of FIG. 4, several non-welding areas 498 are also shown in the facility 400. The non-welding areas 498 are shown in different positions, spaced from both each other and the welding areas 198. In some examples, the welding areas 198 and non-welding areas 498 may be spaced, and/or the positions and/or thresholds in the database 280 configured, such that an operator 104 and/or tool 106 will never be determined to be proximate two different areas 198/498.

In the example of FIG. 3, if the monitoring process 300 determines the tool 106 and/or operator 104 is not proximate a job/part position at block 306, the monitoring process 300 disables one or more pieces of welding-type equipment 150 and/or welding devices 250 at block 308. For example, the monitoring process 300 may determine that the tool 106 and/or operator 104 is proximate a non-welding area 498 (and/or associated stored position) that is not associated with any particular job and/or part, or a welding area 198 (and/or associated stored position) that is also not associated with any particular job and/or part. In some such examples, the monitoring process 300 may disable one or more pieces of welding-type equipment 150 and/or welding devices 250 to prevent them from being used inappropriately.

In some examples, the monitoring process 300 may disable all known (and/or stored) welding-type equipment 150 and/or welding devices 250. In some examples, the monitoring process 300 may disable any welding-type equipment 150 and/or welding devices 250 within some threshold distance of the operator 104 and/or tool 106. In some examples, the monitoring process 300 may disable the welding-type equipment 150 and/or welding devices 250 currently used and/or attached to (and/or having been most recently used and/or attached to) by the operator 104 and/or tool 106.

In some examples, the monitoring process 300 may disable the welding-type equipment 150 and/or welding device(s) 250 by sending one or more disable command signals to the welding-type equipment 150 and/or welding device(s) 250. In some examples, the disable signal(s) may comprise one or more commands to set certain welding parameters to null and/or zero (e.g., wire feed speed, gas flow rate, target output voltage/current, etc.). The welding-type equipment 150 and/or welding device(s) 250 may, in response, adjust one or more control signals and/or welding parameters to stop and/or prevent the welding-type equipment 150 and/or welding device(s) 250 from being used in a welding-type operation. In some examples, the welding-type equipment 150 and/or welding device(s) 250 may continue to be disabled (and/or be disabled as a default) until and/or unless enabled by the monitoring process 300.

In the example of FIG. 3, the monitoring process 300 proceeds to block 310 if the monitoring process 300 determines the tool 106 and/or operator 104 is proximate a job/part position at block 306. At block 310, the monitoring process 300 identifies the relevant job and/or part.

In some examples, the identification of the relevant job and/or part may involve analysis of input information received at block 306. In some examples, the job/part identification may involve analysis of the associations of job/part identifiers and positions (and/or position identifiers) in the database 280. In some examples, the monitoring process 300 may prompt the operator 104 (e.g., via the computing I/O devices 204) to confirm the identified job/part is correct. To the extent the operator 104 indicates the identification is incorrect, an error may be output, and/or the monitoring process 300 may return to block 304.

In some examples, the monitoring process 300 may provide a list of the closest identified jobs/parts (e.g., ordered according to proximity, selection/identification frequency, perceived likelihood, etc.). For example, there may be a conflict where the tracked position of the tool 106 and/or the operator 104 is within a threshold distance of two or more stored job/part positions. In some examples, the monitoring process 300 may prompt the operator 104 to select the correct job/part from the provided list of jobs/parts. In some examples, the monitoring process 300 may automatically select a job/part (e.g., according to proximity, selection frequency, perceived likelihood, etc.) if the operator 104 neglects to make a selection (e.g., after some threshold time limit).

After the job/part is identified at block 310, the monitoring process 300 identifies the welding instructions associated with the job/part at block 312 (e.g., using the identifier associations in the database 282). After block 312, the monitoring process 300 proceeds to block 314, where the monitoring process 300 outputs the identified welding instructions to the operator 104 (e.g., via the I/O device(s) 204).

In some examples, the welding instructions may be representative of human perceptible work instructions, such as, for example, visual, haptic, and/or audio instructions (e.g., text, images/videos, speech, etc.). In some examples, the welding instructions may provide guidance to an operator 104 as to how and/or when to perform one or more welding-type operations for the job and/or part.

For example, the welding instructions may identify the welding-type equipment 150 and/or other welding devices 250 that should be used during the welding-type operation(s), as well as the welding parameters that should be used by the welding-type equipment 150 and/or other welding devices 250. As another example, the welding instructions may identify where the particular welding-type operation falls in an order of a plurality of welding-type operations, and/or what type of welding-type operation(s) precede and/or follow. As another example, the welding instructions may identify the welding technique parameters used by the operator 104 during the welding-type operation.

In some examples, welding technique parameters may include parameters indicative of a technique used by a (e.g., prior) operator 104, and/or that should be used by the current operator 104, when performing the welding-type operation. For example, welding technique parameters may include a work angle of the welding-type tool 106, a travel angle of the welding-type tool 106, a travel speed of the welding-type tool 106, a travel direction of the welding-type tool 106, an aim of the welding-type tool 106, a distance between a contact tip of the welding-type tool 106 and a workpiece 126 being operated on, a weave frequency of the welding-type tool 106, a weave width of the welding-type tool 106, and/or a dwell time of the welding-type tool 106.

In some examples, the technique parameters output at block 314 may be different than those stored in the database 280 and/or associated with the identified job/part. For example, the stored technique parameters may have been ideal for a right handed operator 104 using a particular welding-type tool 106, while the operator 104 identified in the monitoring process 300 is a left handed operator 104, and/or is using a different welding-type tool 106. In such examples, the monitoring process 300 may recommend different (e.g., comparable, next best, etc.) technique parameters.

In some examples, the welding instructions may include previously recorded sensor data (e.g., images, videos, sounds, electromagnetic readings, thermal readings, etc.) relating to the job/part and/or welding-type operation(s). As another example, the welding instructions may include one or more (e.g., part and/or workpiece 126) models oriented to show particular perspectives.

As another example, the welding instructions may include the time it should take to complete one or more of the welding-type operations, and/or the time it took for one or more prior operators 104 to perform the welding-type operation(s). As another example, the welding instructions may include the distance(s) and/or direction(s) the tool 106 and/or operator 104 should (or previously) traveled during the welding-type operation. As another example, the welding instructions may include the target (and/or prior) positions/orientations of the tool 106 and/or operator 104 during the welding-type operation(s).

In the example of FIG. 3, after block 314, the monitoring process 300 proceeds to block 316 where the monitoring process 300 identifies the appropriate welding-type equipment 150 and/or other welding devices 250 that should be used for the job/part (e.g., using the identifier associations in the database 282). Then, at block 318, the monitoring process 300 identifies the welding parameters that should be used for the job/part (e.g., using the identifier associations in the database 282). Finally, at block 320, the monitoring process 300 enables the identified welding-type equipment 150 and/or other welding devices 250, and/or sets one or more parameters of the welding-type equipment 150 and/or other welding devices 250 based on the identified welding parameters.

In some examples, the enabling of the welding-type equipment 150 and/or other welding device(s) 250, and/or the setting of the parameter(s), may involve communications with the identified welding-type equipment 150 and/or other welding devices 250. In some examples, the monitoring process 300 may enable the welding-type equipment 150 and/or welding device(s) 250 by sending one or more disable command signals to the welding-type equipment 150 and/or welding device(s) 250. In some examples, the monitoring process 300 may set the parameter(s) of the welding-type equipment 150 and/or welding device(s) 250 by sending one or more parameter command signals to the welding-type equipment 150 and/or welding device(s) 250. The welding-type equipment 150 and/or welding device(s) 250 may, in response, adjust one or more control signals and/or parameters to enable welding-type operations and/or comply with the parameter command(s).

In some examples, the welding parameters, the identified welding-type equipment 150, and/or the identified welding devices 250 may be different from those recorded in the database 280 and/or associated with the identified job/part. For example, the welding instructions may have been generated based on welding parameters, welding-type equipment 150, and/or other welding devices 250 used by an expert operator 104, and the operator 104 identified at block 302 may not be qualified and/or authorized to use the same welding parameters, welding-type equipment 150, and/or other welding devices 250. As another example, the operator 104 identified at block 302 may be working in a different facility 400, where the welding-type equipment and/or other welding devices 250 are not available. Further, the available welding-type equipment and/or other welding devices 250 may not be operable with all of the welding parameters recommended by the welding instructions.

In some such examples, the monitoring process 300 may identify, recommend, select, and/or use different (e.g., comparable, next best, etc.) welding parameters, welding-type equipment 150, and/or other welding devices 250. In some examples, the monitoring process 300 may present a recommendation and/or options (e.g., via the I/O devices 204), and wait for a threshold time period for a selection from the operator 104 before making an automatic selection. While shown as ending after block 320, in some examples, the monitoring process 300 may instead return to block 302 or 304.

The disclosed weld monitoring system 100 can use its tracking system 202 and/or monitoring process 300 to automatically identify a job and/or part on which an operator 104 and/or tool 106 is working, and/or automatically provide appropriate welding instructions to the operator 104 based on the identified job and/or part. The weld monitoring system 100 may also identify appropriate equipment 150 and/or devices 250 for the identified job and/or part, and/or configure the equipment 150 and/or devices 250 appropriately for the identified job and/or part.

The automatic identification of the job and/or part on which the operator 104 and/or tool 106 is engaged in working ensures that that the weld monitoring system 100 can still monitor effectively even if operators 104 neglect to provide input regarding their activities. The automatic provision of welding instructions for the identified job/part may reduce the risk of erroneous welding instructions being provided and/or followed, boost productivity, and/or help to ensure a quality welding-type operation is performed. The automatic identification of appropriate welding-type equipment 150 and/or devices 250 for the identified job/part, and/or the automatic configuration of the identified equipment 150/devices 250 for the identified job/part, may likewise boost productivity and/or help to ensure a quality welding-type operation is performed.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

As used herein, disable may mean deactivate, incapacitate, and/or make inoperative. As used herein, enable may mean activate and/or make operational.

Disabling of circuitry, actuators, and/or other hardware may be done via hardware, software (including firmware), or a combination of hardware and software, and may include physical disconnection, de-energization, and/or a software control that restricts commands from being implemented to activate the circuitry, actuators, and/or other hardware. Similarly, enabling of circuitry, actuators, and/or other hardware may be done via hardware, software (including firmware), or a combination of hardware and software, using the same mechanisms used for disabling.

Certain embodiments of the invention are described in the following clauses:
Clause 1. A welding system, comprising:
   a tracking system configured to track a tool position or a tool orientation of a welding-type tool, or an operator position or an operator orientation of a welding operator;
   a welding device configured to provide welding-type power or a welding consumable to the welding-type tool during a welding-type operation;
   memory circuitry configured to store:
      a plurality of welding job identifiers or a plurality of part identifiers,
      a plurality of welding parameter sets,
      a plurality of stored positions,
      a parameter association between each welding parameter set, of the plurality of welding parameter sets, and a welding job identifier of the plurality of welding job identifiers, or a part identifier of the plurality of part identifiers, and
      a position association between each welding job identifier of the plurality of welding job identifiers, or each part identifier of the plurality of part identifiers, and a stored position of the plurality of stored positions; and
   processing circuitry configured to:
      determine whether the torch position or the operator position is proximate a particular stored position of the plurality of stored positions,
      in response to determining the torch position or the operator position is proximate the particular stored position,
         identify a particular job identifier, or a particular part identifier, associated with the particular stored position,
         identify a particular welding parameter set, of the plurality of welding parameter sets, that is associated with the particular job identifier, or the particular part identifier, and
         set one or more device parameters of the welding device based on one or more welding parameters of the particular welding parameter set.
Clause 2. The welding system of clause 1, wherein the welding device comprises a welding-type power supply, a welding wire feeder, or a gas supply device.
Clause 3. The welding system of clause 1, wherein the one or more device parameters comprises one or more of a target wire feed speed, a wire material type, a wire diameter, a welding-type process, an alternating current (AC) balance, a target output electrical current, a target output electrical voltage, an target output electrical frequency, a target gas flow rate, a gas type, a cooling system parameter, a burnback parameter, or a crater fill parameter.
Clause 4. The welding system of clause 1, wherein the tracking system is configured to track the operator by tracking a mobile device of the operator or a piece of wearable apparel worn by the operator.
Clause 5. The welding system of clause 1, wherein the tracking system comprises one or more camera, optical, magnetic, ultrasonic, acoustic, radio frequency identification (RFID), near field communication (NFC), or Bluetooth sensors.
Clause 6. The welding system of clause 1, wherein:
   the memory circuitry further stores:
      a plurality of welding device identifiers, and
      a device association between each welding device identifier of the plurality of welding device identifiers and one or more stored positions of the plurality of stored positions, and
   the processing circuitry is further configured to, in response to determining the torch position or the operator position is proximate the particular stored position:
      identify a particular welding device identifier, of the plurality of welding device identifiers, that is associated with the particular stored position, and
      identify the welding device associated with the particular welding device identifier.
Clause 7. The welding system of clause 1, wherein the processing circuitry is further configured to disable the welding device or the welding-type tool in response to determining:
   the torch position or the operator position is proximate the particular stored position, and
   the particular stored position, is not associated with any particular welding job identifier or any particular part identifier.
Clause 8. A welding system, comprising:
   a tracking system configured to track a tool position or a tool orientation of a welding-type tool, or an operator position or an operator orientation of a welding operator;
   memory circuitry configured to store:
      a plurality of welding job identifiers or a plurality of part identifiers,
      a plurality of welding instruction sets,
      a plurality of stored positions,
      an instruction association between each welding instruction set of the plurality of welding instruction sets and a welding job identifier of the plurality of welding job identifiers, or a part identifier of the plurality of part identifiers, and
      a position association between each welding job identifier of the plurality of welding job identifiers, or each part identifier of the plurality of part identifiers, and a stored position of the plurality of stored positions; and
   processing circuitry configured to:
      determine whether the torch position or the operator position is proximate a particular stored position of the plurality of stored positions,
      in response to determining the torch position or the operator position is proximate the particular stored position:
         identify a particular job identifier, or a particular part identifier, associated with the particular stored position,
         identify a particular welding instruction set, of the plurality of welding instruction sets, that is associated with the particular job identifier, or the particular part identifier, and
         output one or more welding instructions of the particular welding instruction set.
Clause 9. The welding system of clause 8, wherein the one or more welding instructions pertain to how or when to perform a welding-type operation at the particular stored position.
Clause 10. The welding system of clause 9, wherein the one or more welding instructions comprise one or more visual, haptic, or audio instructions.
Clause 11. The welding system of clause 10, further comprising a user interface, the processing circuitry being configured to output the one or more welding instructions via the user interface.
Clause 12. The welding system of clause 9, wherein the one or more welding instructions comprise one or more welding technique parameters representative of a technique used to perform the welding-type operation at the particular stored position.
Clause 13. The welding system of clause 12, wherein the one or more welding technique parameters comprise one or more of a work angle of the welding-type tool, a travel angle of the welding-type tool, a travel speed of the welding-type tool, a travel direction of the welding-type tool, an aim of the welding-type tool, a distance between a contact tip of the welding-type tool and a workpiece being operated on, a weave frequency of the welding-type tool, a weave width of the welding-type tool, or a dwell time of the welding-type tool.
Clause 14. The welding system of clause 8, wherein the tracking system is configured to track the operator by tracking a mobile device of the operator or a piece of wearable apparel worn by the operator, or the tracking system comprises one or more camera, optical, magnetic, ultrasonic, acoustic, radio frequency identification (RFID), near field communication (NFC), or Bluetooth sensors.
Clause 15. A method, comprising:
   tracking, via a tracking system, a tool position or a tool orientation of a welding-type tool, or an operator position or an operator orientation of a welding operator;
   determining, via processing circuitry, whether the torch position or the operator position is proximate a particular stored position of a plurality of stored positions stored in memory circuitry,
   the memory circuitry further storing:
      a plurality of welding job identifiers or a plurality of part identifiers,
      a plurality of welding parameter sets,
      a plurality of welding instruction sets,
      a parameter association between each welding parameter set, of the plurality of welding parameter sets, and a welding job identifier of the plurality of welding job identifiers, or a part identifier of the plurality of part identifiers,
      an instruction association between each welding instruction set of the plurality of welding instruction sets and a welding job identifier of the plurality of welding job identifiers, or a part identifier of the plurality of part identifiers, and
      a position association between each welding job identifier of the plurality of welding job identifiers, or each part identifier of the plurality of part identifiers, and a stored position of the plurality of stored positions;
   in response to determining the torch position or the operator position is proximate the particular stored position,
      identifying, via the processing circuitry, a particular job identifier of the plurality of welding job identifiers, or a particular part identifier of the plurality of part identifiers, associated with the particular stored position,
      identifying, via the processing circuitry, a particular welding parameter set, of the plurality of welding parameter sets, that is associated with the particular job identifier, or the particular part identifier,
      identifying, via the processing circuitry, a particular welding instruction set, of the plurality of welding instruction sets, that is associated with the particular job identifier, or the particular part identifier,
      setting one or more device parameters of a welding device based on one or more welding parameters of the particular welding parameter set, the welding device being configured to provide welding-type power or a welding consumable to the welding-type tool during a welding-type operation, and
      outputting one or more welding instructions of the particular welding instruction set.
Clause 16. The method of clause 15, wherein the welding device comprises a welding-type power supply, a welding wire feeder, or a gas supply device.
Clause 17. The method of clause 16, wherein the one or more device parameters comprises one or more of a target wire feed speed, a wire material type, a wire diameter, a welding-type process, a target output electrical current, a target output electrical voltage, an target output electrical frequency, a target gas flow rate, a gas type, a cooling system parameter, a burnback parameter, or a crater fill parameter.
Clause 18. The method of clause 15, wherein the one or more welding instructions pertain to how or when to perform the welding-type operation at the particular stored position.
Clause 19. The method of clause 18, wherein the one or more welding instructions comprise one or more visual, haptic, or audio instructions, and the one or more welding instruction are outputted via a user interface.
Clause 20. The method of clause 15, wherein the tracking system is configured to track the operator by tracking a mobile device of the operator or a piece of wearable apparel worn by the operator, or the tracking system comprises one or more camera, optical, magnetic, ultrasonic, acoustic, radio frequency identification (RFID), near field communication (NFC), or Bluetooth sensors.

## Claims

1. A welding system, comprising:
a tracking system configured to track a tool position or a tool orientation of a welding-type tool, or an operator position or an operator orientation of a welding operator;
a welding device configured to provide welding-type power or a welding consumable to the welding-type tool during a welding-type operation;
memory circuitry configured to store:
a plurality of welding job identifiers or a plurality of part identifiers,
a plurality of welding parameter sets,
a plurality of stored positions,
a parameter association between each welding parameter set, of the plurality of welding parameter sets, and a welding job identifier of the plurality of welding job identifiers, or a part identifier of the plurality of part identifiers, and
a position association between each welding job identifier of the plurality of welding job identifiers, or each part identifier of the plurality of part identifiers, and a stored position of the plurality of stored positions; and
processing circuitry configured to:
determine whether the torch position or the operator position is proximate a particular stored position of the plurality of stored positions,
in response to determining the torch position or the operator position is proximate the particular stored position,
identify a particular job identifier, or a particular part identifier, associated with the particular stored position,
identify a particular welding parameter set, of the plurality of welding parameter sets, that is associated with the particular job identifier, or the particular part identifier, and
set one or more device parameters of the welding device based on one or more welding parameters of the particular welding parameter set.

2. The welding system of claim 1, wherein the welding device comprises a welding-type power supply, a welding wire feeder, or a gas supply device.

3. The welding system of claim 1, wherein the one or more device parameters comprises one or more of a target wire feed speed, a wire material type, a wire diameter, a welding-type process, an alternating current (AC) balance, a target output electrical current, a target output electrical voltage, an target output electrical frequency, a target gas flow rate, a gas type, a cooling system parameter, a burnback parameter, or a crater fill parameter.

4. The welding system of claim 1, wherein the tracking system is configured to track the operator by tracking a mobile device of the operator or a piece of wearable apparel worn by the operator, or
wherein the tracking system comprises one or more camera, optical, magnetic, ultrasonic, acoustic, radio frequency identification (RFID), near field communication (NFC), or Bluetooth sensors.

5. The welding system of claim 1, wherein:
the memory circuitry further stores:
a plurality of welding device identifiers, and
a device association between each welding device identifier of the plurality of welding device identifiers and one or more stored positions of the plurality of stored positions, and
the processing circuitry is further configured to, in response to determining the torch position or the operator position is proximate the particular stored position:
identify a particular welding device identifier, of the plurality of welding device identifiers, that is associated with the particular stored position, and
identify the welding device associated with the particular welding device identifier.

6. The welding system of claim 1, wherein the processing circuitry is further configured to disable the welding device or the welding-type tool in response to determining:
the torch position or the operator position is proximate the particular stored position, and
the particular stored position, is not associated with any particular welding job identifier or any particular part identifier.

7. A welding system, comprising:
a tracking system configured to track a tool position or a tool orientation of a welding-type tool, or an operator position or an operator orientation of a welding operator;
memory circuitry configured to store:
a plurality of welding job identifiers or a plurality of part identifiers,
a plurality of welding instruction sets,
a plurality of stored positions,
an instruction association between each welding instruction set of the plurality of welding instruction sets and a welding job identifier of the plurality of welding job identifiers, or a part identifier of the plurality of part identifiers, and
a position association between each welding job identifier of the plurality of welding job identifiers, or each part identifier of the plurality of part identifiers, and a stored position of the plurality of stored positions; and
processing circuitry configured to:
determine whether the torch position or the operator position is proximate a particular stored position of the plurality of stored positions,
in response to determining the torch position or the operator position is proximate the particular stored position:
identify a particular job identifier, or a particular part identifier, associated with the particular stored position,
identify a particular welding instruction set, of the plurality of welding instruction sets, that is associated with the particular job identifier, or the particular part identifier, and
output one or more welding instructions of the particular welding instruction set.

8. The welding system of claim 7, wherein the one or more welding instructions pertain to how or when to perform a welding-type operation at the particular stored position.

9. The welding system of claim 8, wherein the one or more welding instructions comprise one or more visual, haptic, or audio instructions, and optionally
wherein the welding system further comprises a user interface, the processing circuitry being configured to output the one or more welding instructions via the user interface.

10. The welding system of claim 8, wherein the one or more welding instructions comprise one or more welding technique parameters representative of a technique used to perform the welding-type operation at the particular stored position, and optionally
wherein the one or more welding technique parameters comprise one or more of a work angle of the welding-type tool, a travel angle of the welding-type tool, a travel speed of the welding-type tool, a travel direction of the welding-type tool, an aim of the welding-type tool, a distance between a contact tip of the welding-type tool and a workpiece being operated on, a weave frequency of the welding-type tool, a weave width of the welding-type tool, or a dwell time of the welding-type tool.

11. The welding system of claim 7, wherein the tracking system is configured to track the operator by tracking a mobile device of the operator or a piece of wearable apparel worn by the operator, or the tracking system comprises one or more camera, optical, magnetic, ultrasonic, acoustic, radio frequency identification (RFID), near field communication (NFC), or Bluetooth sensors.

12. A method, comprising:
tracking, via a tracking system, a tool position or a tool orientation of a welding-type tool, or an operator position or an operator orientation of a welding operator;
determining, via processing circuitry, whether the torch position or the operator position is proximate a particular stored position of a plurality of stored positions stored in memory circuitry,
the memory circuitry further storing:
a plurality of welding job identifiers or a plurality of part identifiers,
a plurality of welding parameter sets,
a plurality of welding instruction sets,
a parameter association between each welding parameter set, of the plurality of welding parameter sets, and a welding job identifier of the plurality of welding job identifiers, or a part identifier of the plurality of part identifiers,
an instruction association between each welding instruction set of the plurality of welding instruction sets and a welding job identifier of the plurality of welding job identifiers, or a part identifier of the plurality of part identifiers, and
a position association between each welding job identifier of the plurality of welding job identifiers, or each part identifier of the plurality of part identifiers, and a stored position of the plurality of stored positions;
in response to determining the torch position or the operator position is proximate the particular stored position,
identifying, via the processing circuitry, a particular job identifier of the plurality of welding job identifiers, or a particular part identifier of the plurality of part identifiers, associated with the particular stored position,
identifying, via the processing circuitry, a particular welding parameter set, of the plurality of welding parameter sets, that is associated with the particular job identifier, or the particular part identifier,
identifying, via the processing circuitry, a particular welding instruction set, of the plurality of welding instruction sets, that is associated with the particular job identifier, or the particular part identifier,
setting one or more device parameters of a welding device based on one or more welding parameters of the particular welding parameter set, the welding device being configured to provide welding-type power or a welding consumable to the welding-type tool during a welding-type operation, and
outputting one or more welding instructions of the particular welding instruction set.

13. The method of claim 12, wherein the welding device comprises a welding-type power supply, a welding wire feeder, or a gas supply device, and optionally
wherein the one or more device parameters comprises one or more of a target wire feed speed, a wire material type, a wire diameter, a welding-type process, a target output electrical current, a target output electrical voltage, an target output electrical frequency, a target gas flow rate, a gas type, a cooling system parameter, a burnback parameter, or a crater fill parameter.

14. The method of claim 12, wherein the one or more welding instructions pertain to how or when to perform the welding-type operation at the particular stored position, and optionally
wherein the one or more welding instructions comprise one or more visual, haptic, or audio instructions, and the one or more welding instruction are outputted via a user interface.

15. The method of claim 12, wherein the tracking system is configured to track the operator by tracking a mobile device of the operator or a piece of wearable apparel worn by the operator, or the tracking system comprises one or more camera, optical, magnetic, ultrasonic, acoustic, radio frequency identification (RFID), near field communication (NFC), or Bluetooth sensors.
